# FASCICULE DE BREVET EUROPEEN

(11) **EP 0 711 912 B1**
(45) Date de publication et mention de la délivrance du brevet: **22.03.2000**
(21) Numéro de dépôt: 95402519.3
(22) Date de dépôt: 10.11.1995
(51) Int. Cl.: F02D 41/22, F02D 41/14

(54) **Procédé de contrôle de l'alimentation carburant d'un moteur à combustion interne**
Verfahren zum Steuern der Kraftstoffzufuhr von Verbrennungsmotoren
Method to control the fuel supply of internal combustion engines

(30) Priorité: 10.11.1994 FR 9413528
(43) Date de publication de la demande: 15.05.1996
(73) Titulaire: REGIE NATIONALE DES USINES RENAULT S.A., 92109 Boulogne Billancourt (FR)
(72) Inventeur: Ferri, Pascal, F-94100 Saint-Maur (FR); Gosselin, Eric, F-91940 Les Ulis (FR); Trubert, Philippe, F-91700 Sainte Genevieve des Bois (FR)
(74) Mandataire: Fernandez, Francis Lionel

(56) Documents cités:
- EP-A- 0 522 849
- DE-A- 3 819 016
- DE-A- 4 225 361
- GB-A- 2 127 585
- US-A- 4 696 277
- US-A- 5 184 595

## Description

La présente invention concerne un procédé de contrôle de l'alimentation en carburant d'un moteur à combustion interne et notamment un procédé de contrôle apte à détecter l'apparition d'une défaillance dans l'alimentation en carburant du moteur.

L'invention concerne plus particulièrement un procédé de contrôle de l'alimentation en carburant d'un moteur à combustion interne et à allumage commandé du type comportant un système d'injection électronique du carburant utilisant une sonde à oxygène disposée sur la ligne d'échappement pour opérer la régulation en boucle fermée du rapport air-carburant.

Les éventuelles défaillances dans l'alimentation en carburant d'un moteur à combustion moderne utilisant une régulation en boucle fermée du rapport air-carburant, comme par exemple un manque de carburant dans le réservoir ou une rupture d'une conduite d'amenée du carburant ou bien encore une panne de la pompe à carburant etc., peuvent entraîner la détérioration d'un tel moteur. En effet, ces défaillances s'accompagnent généralement de périodes d'injection incontrôlées pendant lesquelles s'opèrent de brusques variations de la quantité de carburant injectée, avant que le moteur ne s'arrête de fonctionner. Or, de telles variations de la quantité de carburant injectée et donc du rapport air-carburant peuvent avoir des conséquences néfastes sur le moteur et plus particulièrement conduire à la destruction du pot catalytique qui équipe classiquement la ligne d'échappement de ce dernier.

Les pots catalytiques connus présentent en effet, l'inconvénient d'être relativement fragiles. Ainsi les monolithes portant le catalyseur sont rapidement détruits par des augmentations rapides et anormales de la température. Or de telles augmentations se produisent lors des phases d'alimentation incontrôlées pendant lesquelles d'importantes quantité d'air et de carburant imbrûlé pénètrent dans le pot catalytique où ils s'oxydent en provoquant un fort dégagement de chaleur.

Compte tenu donc de l'impact d'une défaillance de l'alimentation en carburant sur le fonctionnement des moteurs à combustion interne modernes, il est donc important de pouvoir contrôler l'alimentation en carburant afin de reconnaître la survenue de telles défaillances de façon notamment à mettre en oeuvre le plus tôt possible des mesures de sauvegarde appropriées.

Différentes solutions ont donc été développées pour détecter l'apparition d'une défaillance dans l'alimentation en carburant du moteur à la suite notamment d'un manque de carburant dans le réservoir ou encore d'une défaillance du circuit d'alimentation en carburant.

Ainsi, la Demanderesse a décrit dans le document FR-A-92/08012 un système d'injection de carburant selon l'invention qui comprend un circuit d'amenée du carburant sous pression depuis un réservoir de stockage jusqu'à un ou plusieurs électro-injecteurs pilotés par un système de contrôle moteur commandant le temps d'ouverture de chaque électro-injecteur suivant les conditions de fonctionnement du moteur. Ce circuit comporte notamment, une pompe refoulante, un filtre à carburant et un régulateur de pression différentielle pilotant le retour du carburant en excès au réservoir.

Le contrôle de l'alimentation en carburant des injecteurs est alors opéré par le suivi de la pression d'alimentation du carburant au droit de la rampe d'injection grâce à un dispositif de surveillance composé d'un contacteur formant interrupteur électrique qui coopère avec la membrane du régulateur de pression pour contrôler l'écart entre la pression du carburant du circuit d'amenée et celle de l'air comburant dans le collecteur d'admission, ce dispositif étant apte à émettre un signal d'alerte lorsque cet écart de pression est inférieur à un seuil prédéterminé.

La position de l'interrupteur, fermé ou ouvert, renseigne alors directement et simplement sur un manque ou non de carburant dans le circuit d'alimentation des injecteurs et permet ainsi au système électronique de contrôle moteur de mettre en oeuvre une stratégie préprogrammée de sauvegarde du moteur.

Si un tel dispositif permet bien de détecter de façon fiable et précise la survenue d'une défaillance du circuit de carburant telle qu'un manque de carburant, il présente toutefois l'inconvénient de requérir l'utilisation d'un appareillage électrique spécifique ainsi que des câblages supplémentaires à destination du calculateur d'injection.

Le document EP-A-522849 quant à lui décrit un procédé de contrôle de l'alimentation en carburant dans un circuit de carburant d'un moteur à combustion interne à allumage par compression qui ne nécessite pas d'appareillage supplémentaire et qui est directement mis en oeuvre par un calculateur de contrôle moteur à partir des seuls paramètres d'entrée utilisés par ce dernier. Ce procédé consiste essentiellement à analyser la vitesse instantanée de rotation du moteur et à déduire de la détection d'éventuelles fluctuations de type prédéterminé, la survenue d'une défaillance dans l'alimentation du carburant.

Un tel procédé, bien que particulièrement simple à mettre en oeuvre, présente toutefois l'inconvénient d'être peu fiable du fait notamment du nombre important de causes susceptibles d'affecter la vitesse instantanée de rotation d'un moteur indépendamment des défaillances du système d'alimentation en carburant du moteur. Aussi, un tel procédé peut conduire dans certains cas à formuler un diagnostic erroné.

Le document US-A-4969 277 décrit un procédé de contrôle de l'alimentation en carburant dans un circuit de carburant d'un moteur à combustion interne à allumage par compression qui ne nécessite pas, non plus, d'appareillage supplémentaire. Ce procédé consiste essentiellement à analyser le signal délivré par une sonde à oxygène et à déduire l'apparition d'une défaillance dans l'alimentation en carburant du moteur de la survenue d'un nombre donné de périodes d'appauvrissement en synchronisation avec le moteur pendant lesquelles le signal délivré reste pauvre.

Un tel procédé est particulièrement adapté pour repérer la panne d'un injecteur qui se caractérise par un basculement pauvre, du signal de la sonde, synchronisé avec le moteur. Si le signal pauvre n'a aucune régularité quant à sa survenue dans le déroulement de plusieurs cycles-moteurs, alors aucune défaillance du circuit d'alimentation à carburant n'est détectée par ce procédé. Or, les signes avant coureur d'une panne d'essence se traduisent justement par des phases irrégulières, plus ou moins longues, pendant lesquels tous les injecteurs ou une partie de ces injecteurs ne sont pas alimentés correctement.

L'objet de la présente invention est donc un procédé de détection des défaillances de l'alimentation en carburant qui soit à la fois simple à mettre en oeuvre en ce qu'il ne requière aucun dispositif matériel supplémentaire et particulièrement fiable dans son diagnostic.

Le procédé de contrôle de l'alimentation en carburant selon l'invention concerne un moteur à combustion interne à allumage commandé et à injection du carburant du type comportant un système de contrôle électronique utilisant une sonde à oxygène disposée sur la ligne d'échappement pour réguler, en boucle fermée à partir d'un signal alternativement riche ou pauvre, la valeur du rapport air-carburant admis dans les chambres de combustion, ce procédé consistant à analyser le signal délivré par la sonde à oxygène et à déduire l'apparition d'une défaillance dans l'alimentation en carburant du moteur de la survenue d'un nombre donné de périodes d'appauvrissement prédéterminées pendant lesquelles le signal délivré par la sonde à oxygène reste constamment pauvre.

Selon l'invention, ce procédé de contrôle de l'alimentation en carburant d'un moteur à combustion interne est caractérisé en ce que chacune desdites périodes d'appauvrissement prédéterminées est repérée par la transition dudit signal délivré par ladite sonde à oxygène du niveau riche au niveau pauvre, et par le maintien au niveau pauvre dudit signal au delà d'une première temporisation.

Le procédé selon l'invention est donc simple à mettre en oeuvre puisqu'il utilise seulement le signal fourni par la sonde à oxygène déjà présent dans le système de contrôle moteur pour la régulation du temps d'injection. Le procédé selon l'invention est donc fiable car ce signal délivré par la sonde à oxygène est lui directement lié à la quantité de carburant injecté dans le moteur contrairement au régime instantané de rotation du moteur.

Selon une autre caractéristique du procédé de contrôle de l'alimentation en carburant d'un moteur à combustion interne objet de l'invention, le procédé comprend les étapes suivantes :
a) surveiller l'évolution du signal de la sonde à oxygène de façon à détecter la survenue de périodes d'appauvrissement prédéterminées pendant lesquelles le signal délivré par la sonde à oxygène reste constamment pauvre ;
b) compter le nombre de ces périodes d'appauvrissement prédéterminées ;
c) surveiller l'évolution de ce nombre de façon à détecter la survenue d'un nombre prédéterminé de ces périodes d'appauvrissement prédéterminées pendant un laps de temps donné et en déduire, en cas d'une telle détection, l'apparition d'une défaillance dans l'alimentation en carburant du moteur.

Selon une autre caractéristique du procédé de contrôle de l'alimentation en carburant d'un moteur à combustion interne objet de l'invention, l'étape b) consiste à :
incrémenter après chaque identification d'une période d'appauvrissement prédéterminée pendant laquelle le signal délivré par la sonde à oxygène reste constamment pauvre, un compteur spécifique caractéristique du nombre de périodes d'appauvrissement prédéterminées ainsi identifiées.

Selon une autre caractéristique du procédé de contrôle de l'alimentation en carburant d'un moteur à combustion interne objet de l'invention, l'étape c) consiste à :
déclencher une seconde temporisation après l'identification d'une période d'appauvrissement prédéterminée pendant laquelle le signal délivré par la sonde à oxygène reste pauvre ;
surveiller alors l'évolution du compteur enregistrant le nombre de périodes d'appauvrissement prédéterminées reconnues ;
et, si un nombre prédéterminé de périodes d'appauvrissement prédéterminées est repéré avant que la fin de cette seconde temporisation, l'identification de l'apparition d'une défaillance dans l'alimentation en carburant du moteur est alors établie.

Selon une autre caractéristique du procédé de contrôle de l'alimentation en carburant d'un moteur à combustion interne objet de l'invention, les différentes valeurs de seuil considérées évoluent suivant les conditions de fonctionnement du moteur.

Selon une autre caractéristique du procédé de contrôle de l'alimentation en carburant d'un moteur à combustion interne objet de l'invention, le signal délivré par la sonde à oxygène est traité par un filtre passe haut pour détecter certaines anomalies du signal fourni par la sonde à oxygène sans lien avec l'alimentation en carburant du moteur.

Selon une autre caractéristique du procédé de contrôle de l'alimentation en carburant d'un moteur à combustion interne objet de l'invention, la reconnaissance d'une défaillance dans l'alimentation en carburant du moteur entraîne la mise en oeuvre de mesures de sauvegarde appropriées, telles que par exemple l'arrêt du moteur.

On comprendra mieux les buts, aspects et avantages de la présente invention, d'après la description donnée ci-après d'un mode de réalisation de l'invention, donné à titre d'exemple non limitatif, en se référant au dessin annexé, dans lequel :
la figure 1 est une vue schématique d'un moteur à combustion interne équipé d'un dispositif de mise en oeuvre du procédé objet de l'invention ;
la figure 2 est un schéma bloc précisant les étapes du procédé selon l'invention.
La figure 3 est un chronogramme détaillant le déroulement des différentes étapes du procédé selon l'invention ;

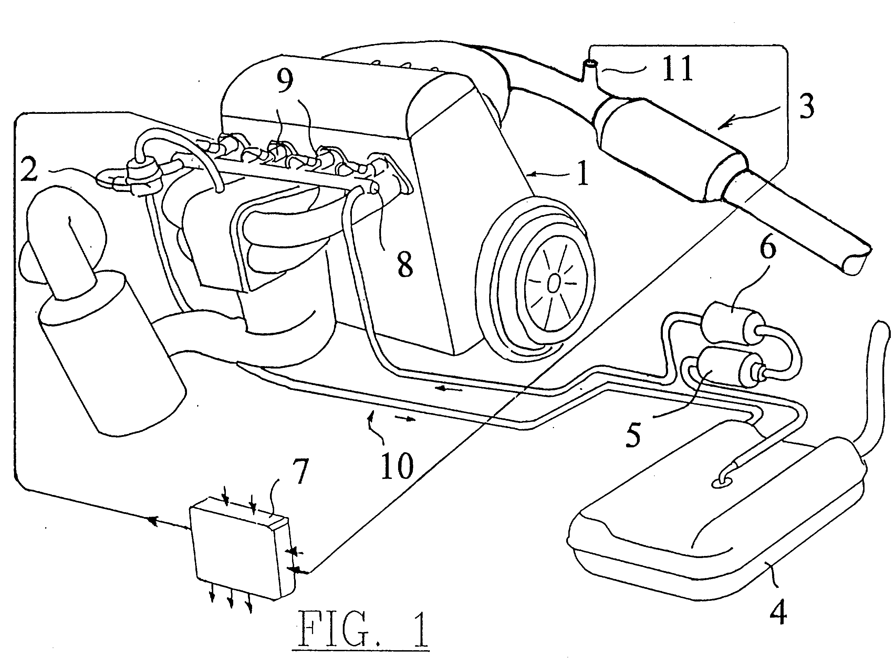

Conformément à la figure 1, seuls les éléments du moteur à combustion interne nécessaires à la compréhension de l'invention ont été représentés.

Le moteur à combustion interne multicylindre à allumage commandé, référencé 1, est, de manière connue en soi, équipé d'un dispositif d'alimentation en carburant à injection multipoint et à commande électronique où chaque cylindre est alimenté en carburant par un électro-injecteur spécifique 9. Le temps d'ouverture de chaque électro-injecteur est alors commandé par un système électronique de contrôle 7 de façon à ajuster le mélange air/carburant à une valeur de richesse donnée.

L'alimentation en carburant des injecteurs 9 est assurée classiquement par un circuit 10 d'amenée du carburant sous pression depuis le réservoir de carburant 4 jusqu'aux électro-injecteurs 9. Le circuit d'amenée du carburant 10 comprend une pompe refoulante 5 entraînée électriquement. A l'intérieur de la pompe 5, une soupape de sécurité évite les surpressions et à la sortie, un clapet anti-retour évite le désamorçage du circuit à l'arrêt du moteur.

La pompe 5 envoie le carburant à travers un filtre 6, puis dans la rampe d'injection 8 qui communique avec les différents injecteurs 9. La pression différentielle d'injection, entre le circuit d'amenée du carburant et le collecteur d'admission, est maintenue constante, quel que soit le débit des injecteurs 9, par le régulateur de pression 2 qui surveille le débit de retour au réservoir 4, du carburant en excès.

Le système électronique de contrôle moteur 7 comprend classiquement un calculateur du type comportant une unité centrale CPU, une mémoire vive RAM, des mémoires mortes ROM et EEPROM, des convertisseurs analogiques-numériques et différentes interfaces d'entrées et de sorties. Il reçoit des signaux d'entrée relatifs au fonctionnement du moteur, il effectue des opérations et génère des signaux de sortie à destination notamment des injecteurs de carburant.

Parmi les signaux d'entrée figurent : l'information "charge" donnée par un capteur de position du papillon des gaz, l'information "pression collecteur" donnée par un capteur de pression (non figuré) disposé dans le collecteur d'admission, l'information "régime" donné par un capteur de position angulaire coopérant avec une cible portée par le vilebrequin (également non figuré) et le signal de sortie d'un capteur à oxygène ou sonde lambda 11, disposée sur la ligne d'échappement 3 du moteur.

Classiquement, le temps d'ouverture Ti des injecteurs déterminant le dosage de la quantité de carburant injectée est déterminé suivant les conditions de fonctionnement du moteur, par exemple à partir des informations pression collecteur et régime, à partir de valeurs prédéterminées stockées sous forme de cartographie dans la mémoire de base du système de contrôle moteur 7. Les valeurs théoriques de la durée des injections lues sont ensuite modulées par des paramètres correcteurs : température d'air, température d'eau, tension de la batterie, accélérations, cliquetis etc..., ainsi que par le signal de sortie de la sonde à oxygène 11.

La sonde à oxygène 11 utilisée, du type sonde lambda, délivre un signal électrique analogique évoluant entre une tension faible 0 mV (ou 10 mV, 20 mV, etc. selon les constructeurs de sondes) pour une richesse inférieure à la valeur de consigne, en général 1 ce qui correspond à un rapport air-carburant stoechiométrique, et une tension élevée, par exemple 800 mV, pour une richesse supérieure à 1.

La détermination de la richesse s'effectue par comparaison de la teneur en oxygène contenue dans les gaz d'échappement à celle contenue dans l'air ambiant. Classiquement, le signal de sortie est assimilable lors du fonctionnement du moteur à une sinusoïde évoluant entre les deux seuils de tension et de fréquence variable en fonction du régime ou encore de la boucle de correction adoptés (proportionnelle, intégrale, dérivée, etc.).

Conformément à l'invention, le système de contrôle moteur 7 est donc programmé pour pouvoir opérer le contrôle de l'alimentation en carburant du moteur et repérer ainsi les éventuelles défaillances affectant l'approvisionnement en carburant du moteur, telle qu'une panne de carburant, et ce afin notamment de mettre en oeuvre des stratégies prédéfinies de sauvegarde du moteur.

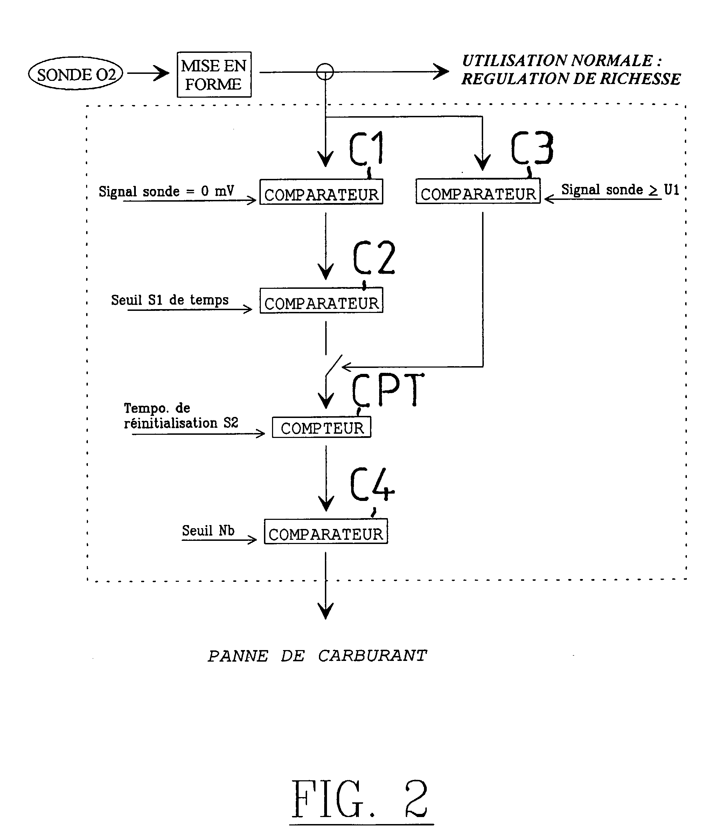

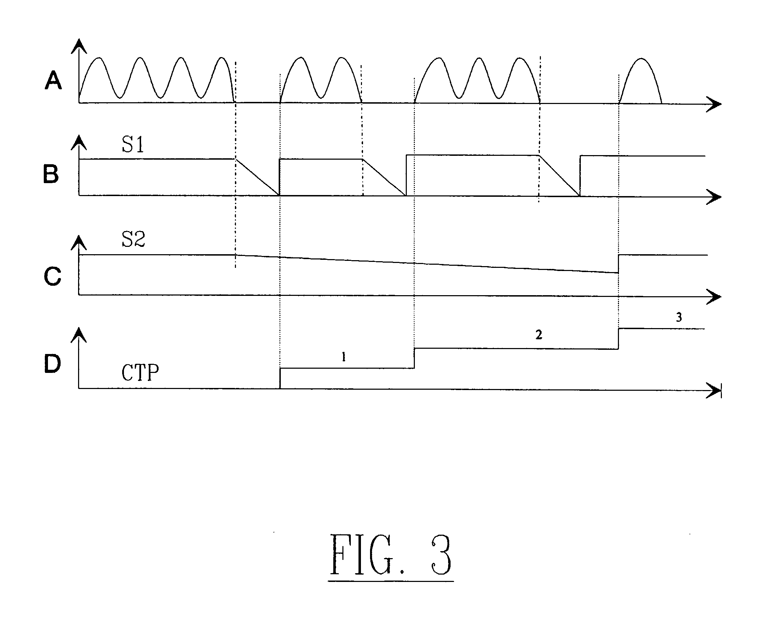

La stratégie retenue mettant en oeuvre le procédé selon l'invention est détaillée dans le chronogramme de la figure 3 et dans l'organigramme de la figure 2.

La demanderesse a pu mettre en évidence qu'une défaillance du système d'alimentation en carburant telle qu'une panne de carburant, se traduit d'abord par l'apparition d'un certain nombre de plages de fonctionnement moteur caractéristiques pendant lesquelles le mélange carburé admis dans les chambres de combustion est globalement très pauvre et donc présente une richesse très inférieure à 1. Ces périodes d'appauvrissement prédéterminées, représentées par la courbe A de la figure 3, se produisent pendant une durée plus ou moins importante avant que la panne ne se produise à proprement dit. La reconnaissance de l'apparition de ces plages de fonctionnement caractéristiques permet donc d'identifier de façon parfaitement fiable une défaillance dans l'alimentation en carburant du moteur et permet donc de procéder préventivement à des mesures de sauvegarde de ce dernier.

Le procédé de contrôle de l'alimentation en carburant du moteur à combustion interne objet de l'invention, consiste donc essentiellement à analyser le signal délivré par la sonde à oxygène 11 servant par ailleurs à la régulation du temps d'injection et à déduire de la survenue d'un nombre donné de périodes d'appauvrissement prédéterminées, l'apparition d'une défaillance dans l'alimentation en carburant du moteur.

Le système de contrôle moteur 7 est donc muni d'un programme de traitement du signal sonde à oxygène 11 qui fonctionne parallèlement à la boucle de régulation de richesse auquel est destiné normalement le signal sonde à oxygène. Ce programme est lancé après chaque démarrage du moteur, dès que le signal sonde à oxygène parvient au système de contrôle moteur 7, et il se déroule tout le temps du fonctionnement du moteur jusqu'à ce qu'une défaillance de l'alimentation en carburant soit reconnue.

Le procédé de contrôle de l'alimentation mis en oeuvre par ce programme de traitement consiste tout d'abord à surveiller l'évolution du signal de la sonde à oxygène 11 de façon à détecter la survenue des périodes d'appauvrissement prédéterminées pendant lesquelles le signal délivré par la sonde à oxygène reste constamment pauvre, et qui sont donc caractéristiques de la défaillance du circuit d'alimentation en carburant.

Ces périodes d'appauvrissement caractéristiques sont définies selon l'invention par l'immobilisation du signal sonde à 0 mV pendant une durée minimale prédéterminée, préalablement définie au banc d'essai.

La détection d'une telle période est opérée simplement de la façon suivante. A chaque transition du signal délivré par la sonde à oxygène 11, du niveau riche (800 mV) au niveau pauvre 0 mV détectée par un comparateur C1, on déclenche aussitôt une première temporisation de durée S1, par exemple 10 s, représentée par la courbe B de la figure 3 et, si le signal sonde demeure à 0 mV jusqu'à la fin de cette première temporisation, testée par un comparateur C2, alors la survenue d'une période d'appauvrissement prédéterminée est établie.

Pour distinguer la survenue d'une période d'appauvrissement générée par la défaillance du circuit d'alimentation en carburant du moteur, d'une éventuelle défaillance du fonctionnement de la sonde, on peut, en variante de réalisation, compléter les critères déjà pris en compte par le critère supplémentaire de retour du signal sonde au-dessus d'une valeur de seuil U1, par exemple 100 mV, retour qui est alors détecté par un comparateur supplémentaire C3.

Les valeurs de seuil S1 et U1 utilisées peuvent être choisies constantes ou bien encore variables suivant les conditions de fonctionnement du moteur, dans ce dernier cas les différentes valeurs sont alors stockées dans le système de contrôle moteur 7 sous la forme de cartographies (par exemple pression-régime).

La reconnaissance de la survenue d'une période d'appauvrissement prédéterminée, déclenche alors l'incrémentation d'une unité d'un compteur CPT, représenté par la courbe D de la figure 3. Ce compteur CPT préalablement initialisé à 0 à chaque démarrage du moteur est donc destiné à comptabiliser le nombre d'apparition des périodes d'appauvrissement prédéterminées. Il suffit alors de surveiller l'évolution de ce nombre pour en déduire l'apparition d'une défaillance dans l'alimentation en carburant du moteur.

Pour ce faire, on déclenche lors de la première incrémentation du compteur CPT une seconde temporisation de durée S2, par exemple 120 s, représentée par la courbe C de la figure 3, et on observe l'évolution du compteur CPT par l'intermédiaire d'un comparateur C4. Si un nombre prédéterminé Nb (par exemple 3) de périodes d'appauvrissement prédéterminées est enregistré pendant la seconde temporisation, alors l'apparition d'une défaillance dans l'alimentation en carburant du moteur est établie, sinon le compteur CPT est réinitialisé à zéro.

Cette valeur de seuil S2 ainsi que le nombre Nb peuvent être choisis comme S1 et U1, constants ou bien variables suivant les conditions de fonctionnement du moteur et être stockés dans le système de contrôle moteur 7 sous la forme d'une cartographie (par exemple pression-régime).

Pour s'affranchir d'éventuelles anomalies intermittentes du signal de la sonde à oxygène 11 dues non pas à une défaillance de l'alimentation en carburant du moteur mais à une défaillance de la sonde elle-même ou du circuit de liaison (court-circuit, etc..) pouvant interférer avec le contrôle de l'alimentation en carburant, on peut procéder, parallèlement au procédé décrit ci-dessus, au traitement du signal délivré par la sonde à oxygène 11 par un filtre passe haut et à la comparaison du signal ainsi produit avec un seuil prédéterminé de façon à identifier l'éventuelle présence d'une panne intermittente. Si une telle défaillance est reconnue alors le contrôle de l'alimentation en carburant est suspendue jusqu'à ce que la panne de sonde ou de sa connectique soit réparée.

La reconnaissance d'une défaillance de l'alimentation en carburant du moteur génère aussitôt par exemple le passage à 1 d'un indicateur de changement d'état ou drapeau spécifique, préalablement initialisé à 0 à chaque démarrage du moteur, ce qui déclenche la mise en oeuvre de mesures de sauvegarde appropriées telle que l'arrêt du moteur par coupure de l'alimentation des injecteurs en carburant en imposant par exemple un temps d'injection nul. Le moteur s'arrête alors avant que le moteur et plus particulièrement le pot catalytique n'ait subi des dommages irrémédiables.

On peut également, alternativement ou complémentairement à la solution précédente, activer des moyens d'affichage à destination du conducteur, prévenant ce dernier de l'imminence d'une panne sèche et de la nécessité d'arrêter le véhicule.

On peut également, alternativement ou complémentairement aux solutions précédentes, conserver l'information, le stockage pouvant être opéré notamment dans la mémoire vive du système de contrôle moteur 7, et pouvoir venir la lire à partir de la trame diagnostic équipant le système de contrôle moteur.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi, le procédé de contrôle de l'alimentation en carburant selon l'invention peut fonctionner quel que soit le type de sonde à oxygène et notamment avec des sondes à oxygène proportionnelles, seule la définition des périodes d'appauvrissement prédéterminées s'en trouve affectée notamment quant au seuil de tension sonde considérée.

Ainsi, pour repérer si une succession de périodes surviennent dans un laps de temps donné, il est possible de développer d'autres stratégies par exemple en déclenchant à chaque incrémentation du compteur CPT une temporisation de durée S2 et en observant l'évolution du compteur à la fin de chaque temporisation, le compteur CPT n'étant plus alors rénitialisé qu'à chaque démarrage moteur.

## Revendications

1. Procédé de contrôle de l'alimentation en carburant d'un moteur (1) à combustion interne à allumage commandé et à injection du carburant du type comportant un système de contrôle électronique (7) utilisant une sonde à oxygène (11) disposée sur la ligne d'échappement (3) pour réguler en boucle fermée à partir d'un signal alternativement riche ou pauvre la valeur du rapport air-carburant admis dans les chambres de combustion, consistant à analyser le signal délivré par ladite sonde à oxygène (11) et à déduire l'apparition d'une défaillance dans l'alimentation en carburant du moteur de la survenue d'un nombre donné de périodes d'appauvrissement prédéterminées pendant lesquelles le signal délivré par ladite sonde à oxygène (11) reste pauvre, caractérisé en ce que chacune desdites périodes d'appauvrissement prédéterminées est repérée par la transition dudit signal délivré par ladite sonde à oxygène (11) du niveau riche au niveau pauvre, et par le maintien au niveau pauvre dudit signal au delà d'une première temporisation (S1).

2. Procédé de contrôle de l'alimentation en carburant d'un moteur (1) à combustion interne selon la revendication 1, caractérisé en ce qu'il comprend les étapes suivantes :
a) surveiller l'évolution du signal de la sonde à oxygène de façon à détecter la survenue desdites périodes d'appauvrissement prédéterminées pendant lesquelles le signal délivré par ladite sonde à oxygène (11) reste pauvre ;
b) compter le nombre desdites périodes ;
c) surveiller l'évolution dudit nombre de façon à détecter la survenue d'un nombre prédéterminé (Nb) desdites périodes pendant un laps de temps donné (S2) et en déduire, en cas d'une telle détection, l'apparition d'une défaillance dans l'alimentation en carburant du moteur.

3. Procédé de contrôle de l'alimentation en carburant d'un moteur (1) à combustion interne selon la revendication 2, caractérisé en ce que l'étape b) consiste à :
incrémenter après chaque identification d'une période d'appauvrissement prédéterminée pendant laquelle le signal délivré par ladite sonde à oxygène (11) reste pauvre, un compteur spécifique (CPT) du nombre de périodes d'appauvrissement prédéterminées ainsi identifiées.

4. Procédé de contrôle de l'alimentation en carburant d'un moteur (1) à combustion interne selon la revendication 3, caractérisé en ce que l'étape c) consiste à :
déclencher une seconde temporisation (S2) après l'identification d'une période d'appauvrissement prédéterminée pendant laquelle le signal délivré par ladite sonde à oxygène (11) reste pauvre ;
surveiller alors l'évolution dudit compteur (CPT) enregistrant le nombre de périodes d'appauvrissement prédéterminées reconnues ;
et, si un nombre prédéterminé (Nb) de périodes d'appauvrissement prédéterminées est repéré avant la fin de ladite seconde temporisation (S2), l'identification de l'apparition d'une défaillance dans l'alimentation en carburant du moteur est alors établie.

5. Procédé de contrôle de l'alimentation en carburant d'un moteur (1) à combustion interne selon l'une quelconque des revendications 2 à 4, caractérisé en ce que les différentes valeurs de seuil données (S1,U1,S2,Nb) évoluent suivant les conditions de fonctionnement du moteur.

6. Procédé de contrôle de l'alimentation en carburant d'un moteur (1) à combustion interne selon l'une quelconque des revendications 1 à 5, caractérisé en ce que le signal délivré par ladite sonde à oxygène (11) est traité par un filtre passe haut pour détecter certaines anomalies du signal fourni par la sonde à oxygène (11) sans lien avec l'alimentation en carburant du moteur.

## Patentansprüche

1. Verfahren zum Steuern der Kraftstoffzufuhr eines Verbrennungsmotors (1) mit gesteuerter Zündung und Kraftstoffeinspritzung, der ein elektronisches Steuersystem (7) umfaßt, bei dem eine in der Auspuffleitung (3) angeordnete Sauerstoffsonde (11) zur Regelung des Wertes des Luft-Kraftstoff-Verhältnisses des in die Verbrennungskammern eingeleiteten Gemischs in einer geschlossenen Schleife ausgehend von einem wechselweise starken oder schwachen Signal verwendet wird, das darin besteht, das von der genannten Sauerstoffsonde (11) gelieferte Signal auszuwerten und das Eintreten einer Störung in der Kraftstoffzufuhr des Motors aus dem Auftreten einer gegebenen Anzahl vorbestimmter Abmagerungsperioden abzuleiten, in denen das von der genannten Sauerstoffsonde (11) gelieferte Signal schwach bleibt, dadurch gekennzeichnet, daß jede der genannten vorbestimmten Abmagerungsperioden durch den Übergang des genannten, von der genannten Sauerstoffsonde (11) gelieferten Signals vom starken zum schwachen Pegel sowie durch das Halten des genannten Signals über eine erste Verzögerung (S1) hinaus erfasst wird.

2. Verfahren zum Steuern der Kraftstoffzufuhr eines Verbrennungsmotors (1) gemäß Anspruch 1, dadurch gekennzeichnet, daß es folgende Stufen umfaßt:
a) Überwachung der Entwicklung des Signals der Sauerstoffsonde in der Art und Weise, daß das Eintreten der genannten vorbestimmten Abmagerungsperioden festgestellt wird, während deren das von der genannten Sauerstoffsonde (11) gelieferte Signal schwach bleibt;
b) Zählung der Anzahl der genannten Perioden;
c) Überwachung der Entwicklung dieser Anzahl, um das Auftreten einer vorbestimmten Anzahl (Nb) der genannten Perioden innerhalb einer gegebenen Zeitspanne (S2) festzustellen und im Falle einer solchen Feststellung daraus das Auftreten einer Störung in der Kraftstoffzufuhr des Motors abzuleiten.

3. Verfahren zum Steuern der Kraftstoffzufuhr eines Verbrennungsmotors (1) gemäß Anspruch 2, dadurch gekennzeichnet, daß die Stufe b) darin besteht,
nach jeder Erkennung einer vorbestimmten Abmagerungsperiode, während der das von der genannten Sauerstoffsonde (11) gelieferte Signal schwach bleibt, einen speziellen, für die Anzahl der auf diese Weise erkannten vorbestimmten Abmagerungsperioden Zähler (CPT) zu inkrementieren.

4. Verfahren zum Steuern der Kraftstoffzufuhr eines Verbrennungsmotors (1) gemäß Anspruch 3, dadurch gekennzeichnet, daß die Stufe c) darin besteht,
nach der Erkennung einer vorbestimmten Abmagerungsperiode, während der das von der genannten Sauerstoffsonde (11) gelieferte Signal schwach bleibt, eine zweite Verzögerung (S2) auszulösen;
dann den Gang des genannten Zählers (CPT), der die Anzahl der erkannten vorbestimmten Abmagerungsperioden registriert, zu überwachen;
und, wenn eine vorher festgelegte Anzahl (Nb) von vorbestimmten Abmagerungsperioden vor Ablauf dieser zweiten Verzögerung (S2) ermittelt wird, das Auftreten einer Störung in der Kraftstoffzufuhr des Motors festzustellen.

5. Verfahren zum Steuern der Kraftstoffzufuhr eines Verbrennungsmotors (1) gemäß einem der Ansprüche 2 bis 4, dadurch gekennzeichnet, daß die verschiedenen vorgegebenen Schwellenwerte (S1, U1, S2, Nb) sich entsprechend den Betriebsbedingungen des Motors entwickeln.

6. Verfahren zum Steuern der Kraftstoffzufuhr eines Verbrennungsmotors (1) gemäß einem der Ansprüche 1 bis 5, dadurch gekennzeichnet, daß das von der genannten Sauerstoffsonde (11) gelieferte Signal von einem Hochpaßfilter zur Ermittlung bestimmter Anomalien des von der Sauerstoffsonde (11) ohne Verbindung mit der Kraftstoffzufuhr des Motors gelieferten Signals verarbeitet wird.

## Claims

1. A method for controlling the fuel supply to an internal combustion engine (1) with controlled ignition and fuel injection of the type comprising an electronic control system (7) using an oxygen probe (11) disposed on the exhaust line (3) for the closed loop regulation, from a signal that is alternately rich or poor, of the value of the air-fuel ratio admitted to the combustion chambers, consisting in analysing the signal transmitted by the oxygen probe (11) and in deducing the appearance of a defect in the fuel supply to the engine when a given number of predetermined depletion periods, during which the signal transmitted by the oxygen probe (11) remains poor, occurs, characterised in that each of the predetermined depletion periods is detected by the transition of the signal transmitted by the oxygen probe (11) from the rich state to the poor state and by the maintenance of the signal in the poor state beyond a first time period (S1).

2. A method for controlling the fuel supply to an internal combustion engine (1) as claimed in claim 1, characterised in that it comprises the following steps:
a) monitoring the evolution of the signal from the oxygen probe in order to detect when the predetermined depletion periods, during which the signal transmitted by the oxygen probe (11) remains poor, have occurred,
b) metering the number of such periods,
c) monitoring the evolution of this number in order to detect when a predetermined number (Nb) of these periods have occurred in a given time period (S2) and deducing therefrom, in the case of such detection, the appearance of a defect in the engine fuel supply.

3. A method for controlling the fuel supply to an internal combustion engine (1) as claimed in claim 2, characterised in that step b) consists in increasing, after each identification of a predetermined depletion period during which the signal transmitted by the oxygen probe (11) remains poor, a specific counter (CPT) of the number of predetermined depletion periods thus identified.

4. A method for controlling the fuel supply to an internal combustion engine (1) as claimed in claim 3, characterised in that step c) consists in triggering a second time period (S2) after the identification of a predetermined depletion period during which the signal transmitted by the oxygen probe (11) remains poor, monitoring the evolution of the counter (CPT) recording the number of predetermined depletion periods recognised and, if a predetermined number (Nb) of predetermined depletion periods is detected before the end of this second time period (S2), the identification of the appearance of a defect in the engine fuel supply is thus established.

5. A method for controlling the fuel supply to an internal combustion engine (1) as claimed in any one of claims 2 to 4, characterised in that the various given threshold values (S1, U1, S2, Nb) evolve in accordance with the engine operating conditions.

6. A method for controlling the fuel supply to an internal combustion engine (1) as claimed in any one of claims 1 to 5, characterised in that the signal transmitted by the oxygen probe (11) is processed by a high-pass filter in order to detect certain anomalies in the signal transmitted by the oxygen probe (11) that are unconnected with the engine fuel supply.
